# EUROPEAN PATENT APPLICATION

(11) **EP 4 438 193 A1**
(43) Date of publication of application: **02.10.2024**
(21) Application number: 22898411.8
(22) Date of filing: 10.11.2022
(51) Int. Cl.: B09B 3/30, B09B 101/15

(54) **DISMANTLING METHOD AND DISMANTLING DEVICE**

(30) Priority: 24.11.2021 JP 2021189943
(71) Applicant: Solar Frontier K.K., Tokyo 100-0005 (JP)
(72) Inventor: SAKAI, Noriyuki, Tokyo 100-0005 (JP)
(74) Representative: Hoffmann Eitle
(86) International application number: PCT/JP2022/041879
(87) International publication number: WO 2023/095627

(57) **Abstract**

Provided is a disassembly apparatus capable of easily peeling a glass layer of a photoelectric conversion panel. The disassembly apparatus comprises: a curve guide (120) that that curves a photoelectric conversion panel including a photoelectric conversion element (21) and a glass layer (23); and a first blade (130) that applies an external force to peel off the glass layer (23) of the photoelectric conversion panel curved along the curve guide (120) .

## Description

### Technical Field

The present invention relates to a disassembly method and a disassembly apparatus for disassembling, for example, a photoelectric conversion panel such as a solar cell panel.

### Background Art

In recent years, from the viewpoint of resource utilization and environmental protection, a technique of recycling used objects as resources has attracted attention. For example, a photoelectric conversion panel (solar cell panel) installed on a roof of a building such as a house is rapidly spreading in recent years. Therefore, development of a recycling technique for a photoelectric conversion panel is desired.

Patent Literature 1 below discloses a recycling method for a photoelectric conversion panel. The recycling method described in Patent Literature 1 is applied to a photoelectric conversion panel including a cover glass, a battery layer, and a sealing material for closely adhering the cover glass, the battery layer, and the sealing material. This recycling method includes peeling off the sealing material and the battery layer from an interface between the cover glass and the sealing material by applying a force to the sealing material from a side surface of the photoelectric conversion panel by a blade edge in a state where the interface between the cover glass and the sealing material is heated to a predetermined temperature range. Accordingly, the glass material can be effectively recycled.

Patent Literature 2 below discloses a recycling method for a photoelectric conversion panel. In the recycling method described in Patent Literature 2, after heating treatment of the photoelectric conversion panel, the photoelectric conversion panel (workpiece) is sent to the peeling device. The photoelectric conversion panel is conveyed while being sandwiched between a bend guide roller and a bend roller in the peeling apparatus. When the workpiece is wound around the bend roller, the workpiece is curved with the glass side facing inward, and shear stress acts on the inside of the workpiece along the circumferential direction of the bend roller. The glass is peeled off from the photoelectric conversion panel and the back sheet by the shear stress.

### Citation List

### Patent Literature

Patent Literature 1: WO 2019/203026 A1
Patent Literature 2: JP 2017-006839 A

### Summary

Usually, a frame is attached to an edge of the photoelectric conversion panel. When the frame is detached from the photoelectric conversion panel, the cover glass may be broken. When the cover glass breaks, the cover glass is separated into a large number of glass pieces on the battery layer (photoelectric conversion element). It is difficult to peel off the large number of glass pieces from the battery layer by the method described in Patent Literature 1, that is, the method using the blade edge with the photoelectric conversion panel placed on a flat stage.

In the method described in Patent Literature 2, a glass layer is peeled off from the photoelectric conversion element by applying shear stress by the bend guide roller and the bend roller. However, there is a limit to peeling off a large number of broken glass pieces adhering to the sealing material only by a frictional force (shear stress) of the roller.

Therefore, an improved disassembly apparatus and a disassembly method capable of separating a glass layer of a photoelectric conversion panel are desired.

A disassembly apparatus according to one aspect comprises: a curve guide that curves a photoelectric conversion panel including a photoelectric conversion element and a glass layer; and a first blade that applies an external force to peel off the glass layer of the photoelectric conversion panel curved along the curve guide.

A disassembly method according to one aspect comprises a peeling step of applying an external force for peeling off a glass layer of a photoelectric conversion panel curved while the photoelectric conversion panel including a photoelectric conversion element and the glass layer is curved.

### Brief Description of Drawings

Fig. 1 is a schematic cross-sectional view of a photoelectric conversion module according to an embodiment.
Fig. 2 is a block diagram of a disassembly apparatus according to a first embodiment.
Fig. 3 is a schematic view illustrating a configuration of the disassembly apparatus according to the first embodiment.
Fig. 4 is a schematic enlarged view of a region R1 in Fig. 3.
Fig. 5 is a flowchart of a disassembly method according to the first embodiment.
Fig. 6 is a schematic enlarged view of the vicinity of a curve guide and a first blade of a disassembly apparatus according to a second embodiment.
Fig. 7 is a block diagram of a disassembly apparatus according to a third embodiment.
Fig. 8 is a schematic view illustrating a situation of a peeling step in a disassembly method according to a third embodiment.
Fig. 9 is a schematic view illustrating a situation subsequent to Fig. 8.
Fig. 10 is a schematic view illustrating a situation subsequent to Fig. 9.
Fig. 11 is a schematic view illustrating a situation subsequent to Fig. 10.

### Description of Embodiments

Hereinafter, embodiments will be described with reference to the drawings. In the following drawings, the same or similar parts are denoted by the same or similar reference numerals. However, it should be noted that the drawings are schematic, and ratios of dimensions and the like may be different from actual ones.

### [Configuration of Photoelectric Conversion Module]

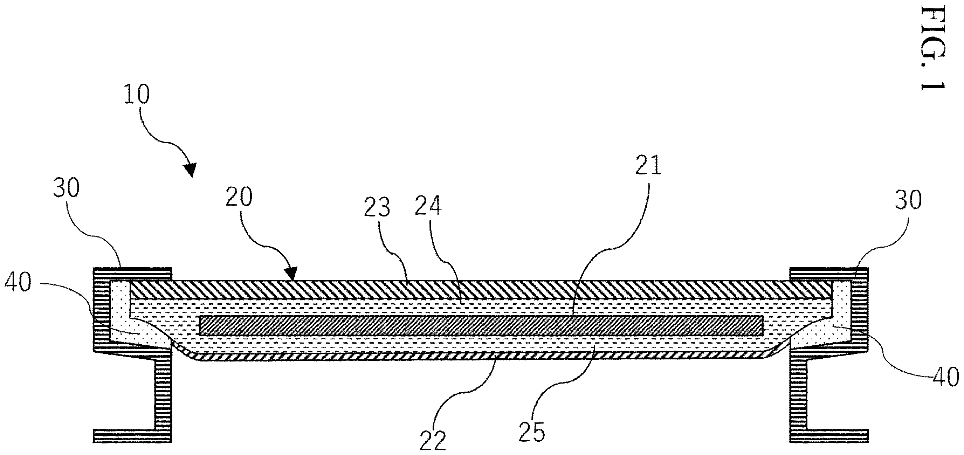

First, an example of a configuration of a photoelectric conversion module that can be recycled will be described. Fig. 1 is a schematic cross-sectional view of a photoelectric conversion module according to an embodiment.

In the example illustrated in Fig. 1, a photoelectric conversion module 10 includes a photoelectric conversion panel 20 and a frame 30 surrounding an outer edge of the photoelectric conversion panel 20. A junction box and an output cable (not illustrated) serving as a power extraction port may be attached to the back surface of the photoelectric conversion module 10.

In addition, a sealing material 40 may be provided between the photoelectric conversion panel 20 and the frame 30. The material constituting the sealing material 40 is not particularly limited, and examples thereof include a polyethylene resin, a fluorine resin, a polystyrene resin, a polyolefin resin, a silicone resin, and a butyl rubber.

The photoelectric conversion panel 20 may include a photoelectric conversion element 21, a rear protective layer 22, a cover glass 23, a first sealing layer 24, and a second sealing layer 25. The cover glass 23 may be, for example, a transparent or translucent glass layer. The glass layer may be constituted by, for example, tempered glass.

The first sealing layer 24 is provided between the photoelectric conversion element 21 and the cover glass 23. Examples of the material constituting the first sealing layer 24 include an ethylene-vinyl acetate resin, a polyethylene resin, a fluorine resin, a polystyrene resin, a polyolefin resin, a silicone resin, and a butyl rubber.

The second sealing layer 25 is provided between the photoelectric conversion element 21 and the rear protective layer 22. The material constituting the second sealing layer 25 is not particularly limited, and examples thereof include an ethylene-vinyl acetate resin, a polyethylene resin, a fluorine resin, a polystyrene resin, a polyolefin resin, a silicone resin, and a butyl rubber.

The rear protective layer 22 is a protective layer that covers a back side of the photoelectric conversion panel 20. The rear protective layer 22 is provided on the back side of the second sealing layer 25. The material constituting the rear protective layer 22 may be, for example, a PET resin, a polyvinyl fluoride (PVF) resin, a polyvinylidene fluoride (PVDF) resin, a nylon resin, a polyamide resin, or a combination thereof. Alternatively, the rear protective layer 22 may be constituted by a metal sheet.

The photoelectric conversion element 21 is an element that converts light energy into electric energy. The photoelectric conversion element 21 may have any configuration capable of converting light energy into electric energy. Examples of such an element include a crystalline photoelectric conversion element and a thin-film CIS photoelectric conversion element. Many crystalline photoelectric conversion elements have a structure using semiconductor silicon as a substrate. Specifically, the crystalline silicon photoelectric conversion element includes a plurality of battery cell portions constituted by a silicon substrate.

The thin-film CIS photoelectric conversion element may include, for example, a substrate, a first electrode layer, a photoelectric conversion layer, and a second electrode layer in this order. The substrate may be a member serving as a base of a stack constituting the photoelectric conversion element 21. The substrate may be constituted by, for example, a glass layer. The first electrode layer may be constituted by, for example, a metal such as molybdenum, titanium, chromium, or silver. The second electrode layer may be constituted by, for example, zinc oxide (ZnO) to which a group III element is added or indium tin oxide (ITO). In a thin-film CIS photoelectric conversion module, the photoelectric conversion layer may be constituted by, for example, a compound semiconductor containing a group I element (Cu, Ag, Au, or the like), a group III element (Al, Ga, In, or the like), and a group VI element (O, S, Se, Te, or the like).

### [First Embodiment]

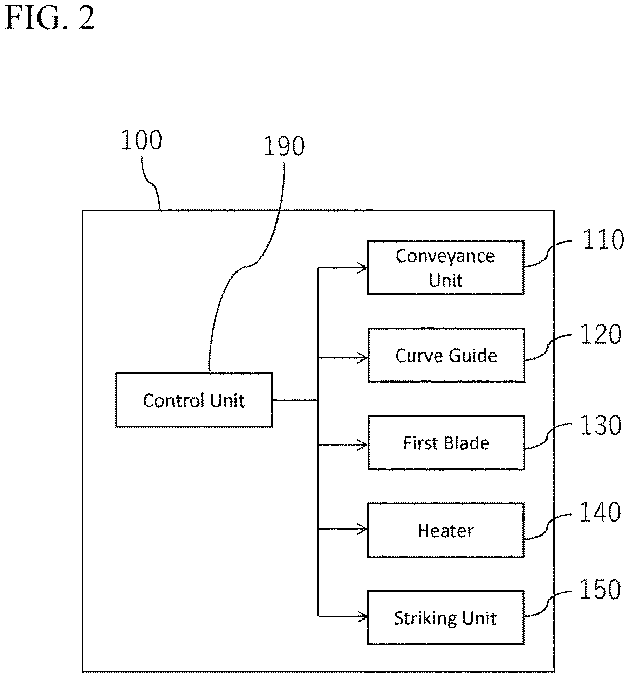

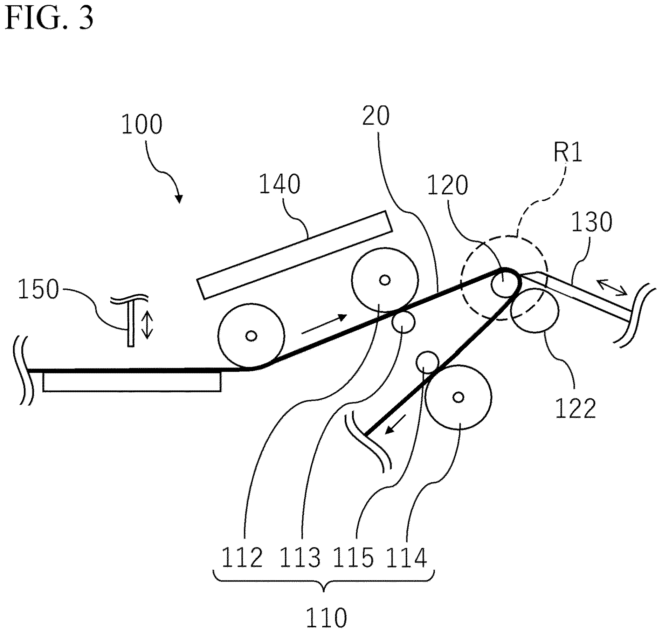

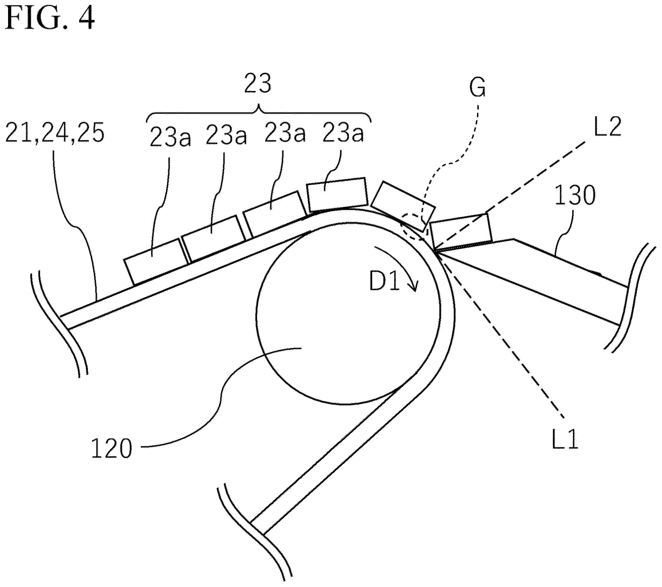

A disassembly apparatus according to a first embodiment will be described with reference to Figs. 2 to 4. Fig. 2 is a block diagram of the disassembly apparatus according to the first embodiment. Fig. 3 is a schematic view illustrating a configuration of the vicinity of a conveyance unit, a curve guide, and a first blade constituting the disassembly apparatus according to the first embodiment. Fig. 4 is a schematic enlarged view of a region R1 in Fig. 3.

A disassembly apparatus 100 can be used for disassembling the photoelectric conversion panel described above. Preferably, the disassembly apparatus 100 can be used as a disassembly apparatus for recycling members or materials that constitute the photoelectric conversion panel. The disassembly apparatus 100 can handle the photoelectric conversion panel 20 in a state in which the frame 30, a junction box (not illustrated), and the like are removed from the photoelectric conversion module 10. The disassembly apparatus 100 is used to peel off the glass layer that constitutes the photoelectric conversion panel 20. The glass layer may be the cover glass 23 described above. In the following description, the cover glass 23 will be described as an example of the glass layer to be peeled off. However, it should be noted that the glass layer to be peeled off is not limited to the cover glass 23.

The cover glass 23 of the photoelectric conversion panel 20 handled by the disassembly apparatus 100 may be broken in advance. The cover glass 23 may be broken, for example, at the time of collecting the photoelectric conversion module 10 after use or at the time of removing the frame 30 or a junction box (not illustrated). However, if possible, the cover glass 23 does not need to be broken.

The disassembly apparatus 100 may include a conveyance unit 110, a curve guide 120, a first blade 130, a heater 140, a striking unit 150 and a control unit 190. The control unit 190 is configured to perform various types of control of following units constituting the disassembly apparatus 100, such as the conveyance unit 110, the curve guide 120, the first blade 130, the heater 140 and/or the striking unit 150.

The striking unit 150 may be provided if necessary. The striking unit 150 is preferably used when the cover glass 23 of the photoelectric conversion panel 20 processed by the disassembly apparatus 100 is not broken. The striking unit 150 applies an impact to the cover glass 23 constituting the photoelectric conversion panel 20 and breaks the cover glass 23. The striking unit 150 may have any configuration as long as it is capable of breaking the cover glass 23 of the photoelectric conversion panel 20. By using the striking unit 150, both the photoelectric conversion panel 20 having the cover glass 23 that is unbroken and the photoelectric conversion panel 20 having the cover glass 23 that is broken can be handled by the same disassembly apparatus 100.

The conveyance unit 110 is a unit that conveys the photoelectric conversion panel 20. Specifically, the conveyance unit 110 may be configured to convey the photoelectric conversion panel 20 from which the frame 30 is removed from the photoelectric conversion module 10.

The conveyance unit 110 may include, for example, a pair of first rollers 112, 113 and a pair of second rollers 114, 115. One roller 112 of the pair of first rollers may be a roller rotatable in accordance with a control command from the control unit 190. The other roller 113 of the pair of first rollers may be a driven roller rotatable according to the rotation of the roller 112.

One roller 114 of the pair of second rollers may be a roller rotatable in accordance with a control command from the control unit 190. The other roller 115 of the pair of second rollers may be a driven roller rotatable according to the rotation of the roller 114.

The pair of first rollers 112, 113 and the pair of second rollers 114, 115 convey the photoelectric conversion panel 20 with the photoelectric conversion panel 20 interposed therebetween. In the first embodiment, the conveyance unit 110 is configured to be able to convey the photoelectric conversion panel 20 in at least one direction (first direction) D1.

The curve guide 120 may be provided between the pair of first rollers 112, 113 and the pair of second rollers 114, 115 in the flow direction of the photoelectric conversion panel 20. The curve guide 120 is configured to curve the photoelectric conversion panel 20 while conveying the photoelectric conversion panel 20 by the conveyance unit 110.

Specifically, the photoelectric conversion panel 20 fed from the pair of first rollers 112, 113 is curved along the surface of the curve guide 120 and conveyed toward the pair of second rollers 114, 115 (see Fig. 3). Since the photoelectric conversion panel 20 is sandwiched between the pair of first rollers 112, 113 and the pair of second rollers 114, 115, the photoelectric conversion panel 20 is bent along the surface of the curve guide 120.

The curve guide 120 may be a non-rotatable guide or a rotatable roller. When the curve guide 120 is a rotatable roller, the curve guide 120 may be a roller that is automatically rotatable according to a control command from the control unit 190, or may be a driven roller that rotates according to a roller that is automatically rotatable according to a control command from the control unit 190. In the aspect illustrated in Fig. 3, the curve guide 120 is configured by a driven roller, and is configured to rotate in accordance with automatic rotation of the adjacent rollers 122.

When the curve guide 120 is a rotatable roller, friction between the photoelectric conversion panel 20 and the curve guide 120 is reduced. Thus, an extra load applied to the curve guide 120 is reduced, and the force required for conveying the photoelectric conversion panel 20 is reduced.

On the other hand, when the curve guide 120 is a non-rotatable guide, a mechanism for rotating the curve guide 120 is unnecessary. Therefore, the disassembly apparatus 100 can be simplified. In addition, since a drive mechanism for rotating the curve guide 120 is unnecessary, there is no possibility that peeled glass powder or the like adversely affects the drive mechanism.

The first blade 130 is configured to apply an external force to peel off the cover glass 23, preferably the broken cover glass 23, of the photoelectric conversion panel 20 that is curved along the curve guide 120. The first blade 130 may be configured to be movable between a state in which an edge of the blade is close to the curve guide 120 and a state in which the edge of the blade is retracted from the curve guide 120. In this case, it is preferable that the first blade 130 moves in response to, for example, a control command from the control unit 190. Alternatively, the first blade 130 may be moved manually.

As illustrated in Fig. 4, the conveyance unit 110 conveys the photoelectric conversion panel 20 that has the broken cover glass 23. The photoelectric conversion panel 20 is curved along the curve guide 120. At this time, the photoelectric conversion panel 20 is curved by the curve guide 120 so that the cover glass 23 faces the front side. In other words, the cover glass 23 is directed opposite to the curve guide 120 with respect to the photoelectric conversion element 21.

During peeling of a glass piece 23a, The first blade 130 is preferably disposed so as to be inclined to a downstream side in a conveyance direction of the photoelectric conversion panel 20 from a line L2 orthogonal to a tangent L1 of the curve guide 120 at the position where the blade edge approaches the curve guide 120 (see Fig. 4).

The photoelectric conversion element 21 and the sealing materials 24 and 25 around the photoelectric conversion element are softer than the cover glass 23. The photoelectric conversion element 21 and the sealing materials 24 and 25 are curved along the curve guide 120. On the other hand, since the cover glass 23 is hard, it is difficult for the cover glass to be curved following the curvature of the photoelectric conversion element 21 and the sealing materials 24 and 25. Therefore, as the photoelectric conversion element 21 and the sealing materials 24 and 25 are curved, a force in a peeling direction is applied to an end of a lower surface of the cover glass 23, specifically, an end of a lower surface of the broken glass piece 23a, or a gap G is generated (see Fig. 4).

When the force in the peeling direction is applied to the edge of the lower surface of the glass piece 23a, the glass piece 23a is easily peeled off from the photoelectric conversion element 21 and the sealing materials 24 and 25 even if the force applied from the first blade 130 to the glass piece 23a is a relatively weak force. Further, when the gap G is formed at the edge of the lower surface of the broken glass piece 23a, the first blade 130 may be inserted into the gap G. Thus, the glass piece 23a is easily peeled off from the photoelectric conversion element 21 and the sealing materials 24 and 25.

In the present embodiment, while the glass piece 23a is being peeled off, the first blade 130 does not move, and the photoelectric conversion panel 20 moves by the conveyance unit 110. Thus, the first blade 130 applies a force to peel off the glass piece 23a that is the broken cover glass 23.

From the viewpoint of easily peeling off the cover glass 23 or the broken cover glass 23, it is preferable that a radius of curvature of the curve guide 120 corresponding to a position of an edge of the first blade 130 in a state where an external force for peeling off the cover glass 23 is applied is as small as possible. From this viewpoint, the radius of curvature may be, for example, equal to or less than 10 cm, preferably equal to or less than 7 cm, and more preferably equal to or less than 4 cm.

The cover glass 23 may be broken due to curve by the curve guide 120. In this case, the above-described striking unit 150 is unnecessary.

The disassembly apparatus 100 may include a heater 140 capable of heating the photoelectric conversion panel 20. The heater 140 may be configured to heat the photoelectric conversion panel 20 in a region different from the region where the conveyance unit 110 is provided, or may be configured to heat the photoelectric conversion panel 20 during being conveyed by the conveyance unit 110.

In the first embodiment, the heater 140 is configured to be able to heat the entire region where the conveyance unit 110 is provided. Thus, the heater 140 can heat the photoelectric conversion panel 20 during conveyance or peeling of the cover glass 23.

The sealing materials 24 and 25 are softened and/or melted by heating the photoelectric conversion panel 20 by the heater 140, the cover glass 23 is more easily peeled off by the first blade 130. The heater 140 is preferably heated until the photoelectric conversion panel 20, more specifically, the sealing materials 24, 25 of the photoelectric conversion panel 20 reach, for example, 80 °C to 220 °C, preferably 100 °C to 200 °C, and more preferably 120 °C to 180 °C.

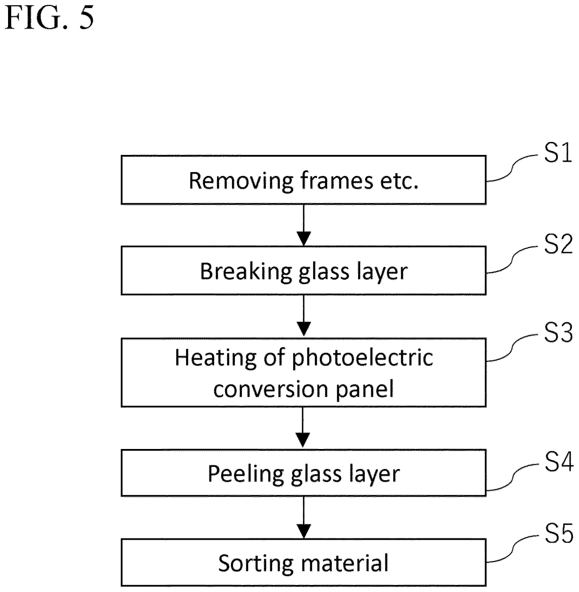

Next, a disassembly method for the photoelectric conversion module will be described with reference to Fig. 5. Fig. 5 is a flowchart of the disassembly method according to the first embodiment.

### (Step S1)

First, the photoelectric conversion module 10 described above is prepared. Then, the frame 30, a junction box (not illustrated) and the like are removed from the photoelectric conversion module 10. Thus, the photoelectric conversion panel 20 of the photoelectric conversion module 10 is taken out. Here, the cover glass 23 may be broken when the frame 30 is removed. Alternatively, when the photoelectric conversion module 10 to be processed is prepared, for example, when the used photoelectric conversion module 10 is collected, the cover glass 23 may already be broken.

### (Striking Step S2)

Next, a striking step S2 of breaking the cover glass 23 of the photoelectric conversion panel 20 is performed before a peeling step described later if necessary. The step of breaking the cover glass 23 is preferably performed when the cover glass 23 is not broken in step S1 or before.

The striking step S2 may be performed by the striking unit 150 of the disassembly apparatus 100 described above, or may be performed by an operator using a striking means such as a hammer.

The cover glass 23 of the photoelectric conversion panel 20 is often constituted by tempered glass. When a strong impact is applied to one part, the entire surface of the tempered glass is broken into a large number of fine glass pieces.

### (Heating Step S3)

Further, the disassembly method according to the present embodiment includes a heating step S3 of heating the photoelectric conversion panel 20. The heating step S3 is performed before or during the peeling step described later. The heating step S3 may be continuously performed before or after the striking step S2 described above.

In the heating step S3, the sealing materials 24 and 25 may be soften and/or melt by heating the photoelectric conversion panel 20 by the heater 140. In the heating step S3, the sealing materials 24 and 25 are preferably heated to, for example, 80 °C to 220 °C, preferably 100 °C to 200 °C, and more preferably 120 °C to 180 °C.

### (Peeling Step S4)

Next, a peeling step S4 is performed in which, while the photoelectric conversion panel 20 including the photoelectric conversion element 21 and the cover glass 23 is curved, an external force for peeling off the cover glass 23 (broken glass piece 23a) is applied to the curved photoelectric conversion panel 20. The peeling step S4 is preferably performed while the photoelectric conversion panel 20 is conveyed in the first direction D1 in a state where the photoelectric conversion panel 20 is curved.

The peeling step S4 can be performed using the conveyance unit 110, the curve guide 120, and the first blade 130 described above (see also Fig. 4). Since the peeling off of the cover glass 23 (broken glass piece 23a) has already been described with reference to Fig. 4, the description thereof is omitted.

The peeled cover glass 23, specifically, the glass piece 23a can be recycled as a glass cullet raw material.

### (Step S5)

After the peeling step S4, various materials may be sorted. For example, after the peeling step S4, the rear protective layer 22 may be separated from the photoelectric conversion panel 20 as necessary. The rear protective layer 22 can be recycled in the form of a sheet as it is. After the peeling step S4, the cover glass 23 or a stacked structure in which the cover glass 23 and the rear protective layer 22 are removed from the photoelectric conversion panel 20 is obtained.

The stacked structure may be pulverized to sort a silicon material, a resin material, and/or a metal material for each material. The metal material can be sorted from other materials, for example by dissolving it in a solution. The resin material can be sorted using, for example, a difference in specific gravity or particle size from other materials.

### [Second Embodiment]

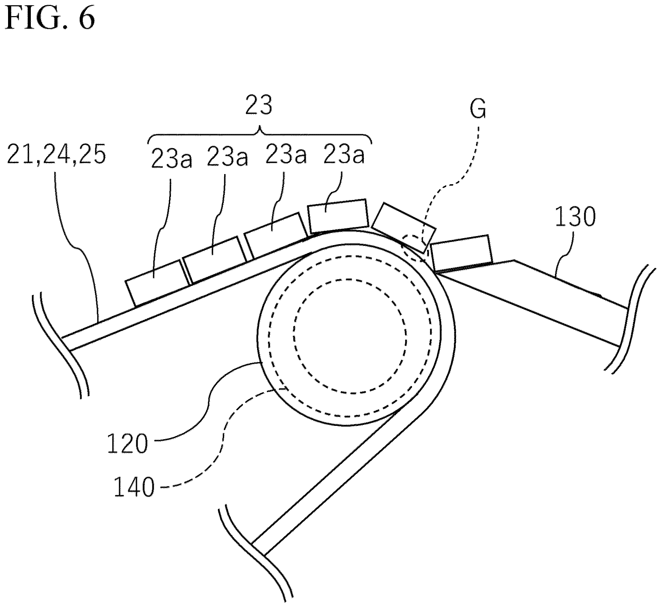

Next, a disassembly apparatus according to a second embodiment will be described with reference to Fig. 6. Fig. 6 is a schematic enlarged view of the vicinity of the curve guide and the first blade of the disassembly apparatus according to the second embodiment. In the second embodiment, the same components as those in the first embodiment are denoted by the same reference numerals. In addition, the description of the same configuration as that of the first embodiment may be omitted.

In the second embodiment, the heater 140 is provided in the curve guide 120. Thus, the heater 140 can heat photoelectric conversion panel 20 during the peeling step S4 described above. The heating temperature is as described in the first embodiment.

Alternatively, the heater 140 may be provided on the pair of first rollers 112, 113 and/or the pair of second rollers 114, 115 that constitute the conveyance unit 110. In this case, the heater 140 can heat the photoelectric conversion panel 20 while the photoelectric conversion panel 20 is conveyed. The heating temperature is as described in the first embodiment.

### [Third Embodiment]

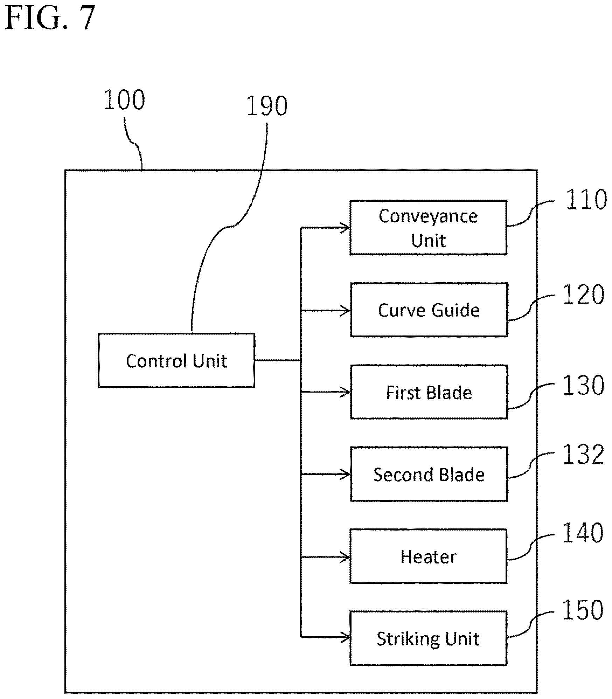

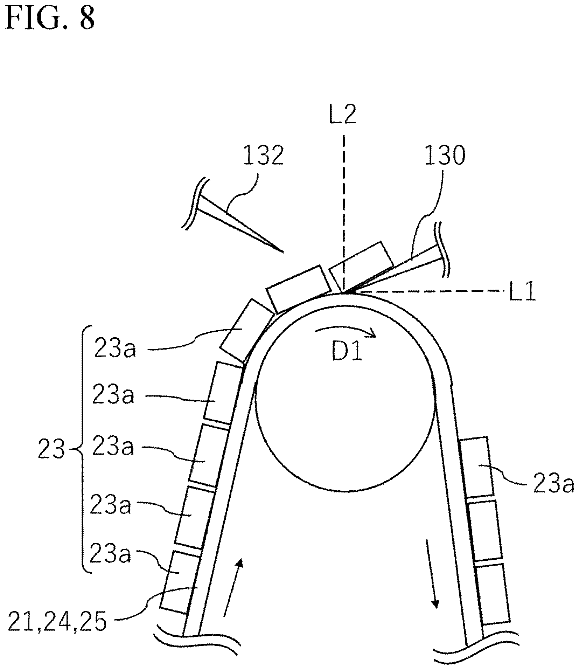

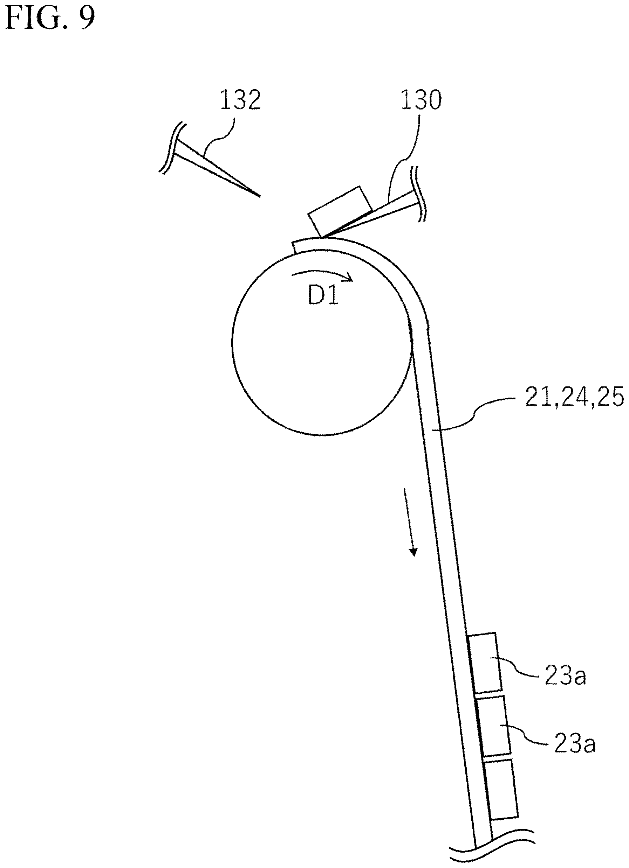

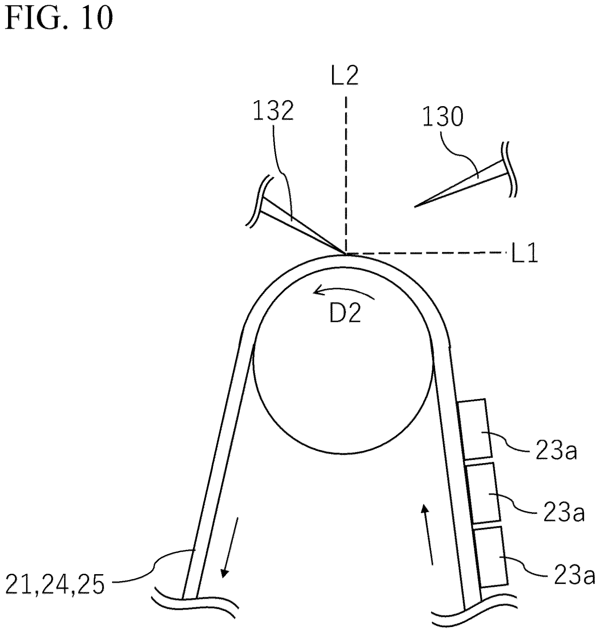

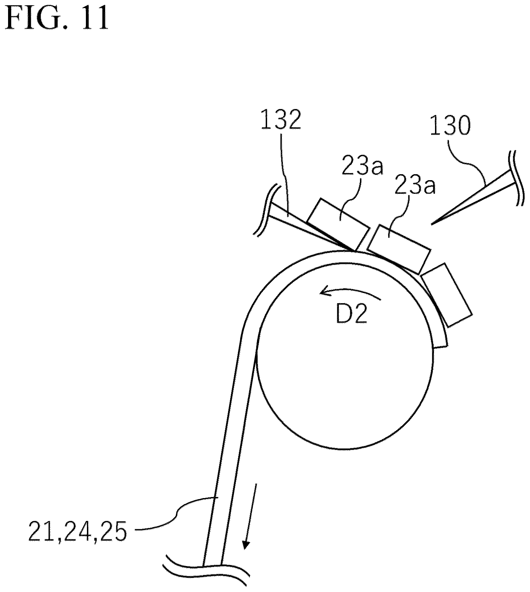

Next, a disassembly apparatus and a disassembly method according to a third embodiment will be described with reference to Figs. 7 to 11. Fig. 7 is a block diagram of a disassembly apparatus according to a third embodiment. Fig. 8 is a schematic view illustrating a situation of a peeling step in the disassembly method according to the third embodiment. Fig. 9 is a schematic view illustrating a situation subsequent to Fig. 8. Fig. 10 is a schematic view illustrating a situation subsequent to Fig. 9. Fig. 11 is a schematic view illustrating a situation subsequent to Fig. 10.

In the third embodiment, the same components as those of the first embodiment and/or the second embodiment are denoted by the same reference numerals. In addition, the description of the same configuration as that of the first embodiment and/or the second embodiment may be omitted.

In the third embodiment, the conveyance unit 110 is configured to be able to move the photoelectric conversion panel 20 in both the first direction D1 and a second direction D2 opposite to the first direction D1. Therefore, the pair of first rollers 112, 113 and the pair of second rollers 114, 115 may be configured to be rotatable in both the forward direction and the reverse direction.

In the third embodiment, the disassembly apparatus 100 includes a first blade 130 and a second blade 132. The first blade 130 is configured to apply an external force to peel off the cover glass 23 of the photoelectric conversion panel 20 while the photoelectric conversion panel 20 is moved in the first direction D1. The second blade 132 is configured to apply an external force to peel off the cover glass 23 of the photoelectric conversion panel 20 while the photoelectric conversion panel 20 is moved in the second direction D2.

Therefore, while the photoelectric conversion panel 20 is moving in the first direction D1, the first blade 130 is close to the curve guide 120, and the second blade 132 is retracted from the curve guide 120 (Figs. 8 and 9). While the photoelectric conversion panel 20 is moving in the second direction D2, the first blade 130 is retracted from the curve guide 120, and the second blade 132 is close to the curve guide 120 (Figs. 10 and 11).

During peeling off the glass piece 23a, The first blade 130 is preferably disposed so as to be inclined to the downstream side in the conveyance direction (first direction D1) of the photoelectric conversion panel 20 from the line L2 orthogonal to the tangent line L1 of the curve guide 120 at the position where the blade edge of the first blade 130 approaches the curve guide 120 (see Fig. 8).

During peeling off glass piece 23a, it is preferable that second blade 132 is disposed so as to be inclined to the downstream side in the conveyance direction (second direction D2) of photoelectric conversion panel 20 from line L2 orthogonal to tangent L1 of curve guide 120 at the position where the cutting edge of second blade 132 approaches curve guide 120 (see Fig. 10).

Thus, the disassembly apparatus 100 according to the third embodiment can apply an external force for peeling off the cover glass 23 in both directions by the first blade 130 and the second blade 132. Since other configurations of the disassembly apparatus 100 are similar to those of the first embodiment and/or the second embodiment, the description thereof will be omitted.

Next, a disassembly method according to a third embodiment will be described. Step S1, the striking step S2, heating step S3, and step S5 described above are similar to those in the first embodiment, and thus the description thereof will be omitted. Hereinafter, the peeling step S4 according to the third embodiment will be described.

In the peeling step S4 according to the third embodiment, first, while the photoelectric conversion panel 20 is conveyed in the first direction in a state where the photoelectric conversion panel 20 is curved, an external force for peeling off the cover glass 23 (glass piece 23a) is applied (see Figs. 8 and 9). This external force can be applied by the first blade 130 described above.

It may be difficult to peel off the glass piece 23a positioned at an edge of the photoelectric conversion panel 20 by the first blade 130. Therefore, while the photoelectric conversion panel 20 is conveyed in the first direction D1, the first blade 130 may start to hit the glass piece 23a near the center of the photoelectric conversion panel 20 in the first direction D1 (see Fig. 8). In this case, the glass piece 23a near the upstream end in the conveyance direction of the photoelectric conversion panel 20 remains on the photoelectric conversion panel 20.

Further, while the photoelectric conversion panel 20 is conveyed in the first direction D1, the glass piece 23a located at the upstream end of the photoelectric conversion panel 20 in the first direction D1 is peeled off by the first blade 130 (see Fig. 9).

Then, the conveyance direction of the photoelectric conversion panel 20 is reversed, and the photoelectric conversion panel 20 starts to be conveyed in the second direction D2 opposite to the first direction D1. As the conveyance direction is reversed, the first blade 130 is retracted from the curve guide 120, and the second blade 132 is brought close to the curve guide 120 (see Fig. 10). In this state, the photoelectric conversion panel 20 is continuously conveyed in the second direction D2. Thus, the glass piece 23a remaining at the time of peeling by the first blade 130 can be peeled off (see Fig. 11).

As described above, while the photoelectric conversion panel 20 is conveyed in the second direction D2 opposite to the first direction D1 in a state where the photoelectric conversion panel 20 is curved, the external force for peeling the cover glass 23 is applied. Therefore, the glass piece 23a can be more firmly peeled off.

In addition, reversing of the conveyance direction of the photoelectric conversion panel 20 and the accompanying change in use of the first blade 130 and the second blade 132 may be repeatedly performed. This makes it possible to peel off the glass piece 23a that has not been peeled off in one reciprocating conveyance of the photoelectric conversion panel 20.

As described above, the contents of the present invention have been disclosed through the embodiments, but it should not be understood that the description and the drawings constituting a part of the disclosure limit the present invention. From this disclosure, various alternative embodiments, examples, and operational techniques will become apparent to those skilled in the art. Therefore, the technical scope of the present invention is defined only by the matters specifying the invention according to the claims appropriate from the above description.

In the embodiment described above, the cover glass 23 as a glass layer is peeled off while the photoelectric conversion panel 20 is conveyed. Alternatively, the cover glass 23 may be peeled off while the photoelectric conversion panel 20 is stopped. In this case, in a state where the photoelectric conversion panel 20 is curved along the curve guide, the external force for peeling off the cover glass 23 is applied by moving the first blade 130 and/or the second blade 132 in a lateral direction.

In the embodiment described above, the glass layer peeled off in the peeling step is the cover glass 23. Without being limited thereto, the glass layer peeled off in the peeling step may be any glass layer different from the cover glass 23, preferably a broken glass layer.

This application claims priority based on Japanese Patent Application No. 2021-189943 filed on November 24, 2021, the entire contents of which are incorporated herein by reference.

## Claims

1. A disassembly apparatus comprising:
a curve guide that curves a photoelectric conversion panel including a photoelectric conversion element and a glass layer; and
a first blade that applies an external force to peel off the glass layer of the photoelectric conversion panel curved along the curve guide.

2. The disassembly apparatus according to claim 1, wherein a radius of curvature of the curve guide corresponding to a position of an edge of the first blade in a state where an external force for peeling off the glass layer is applied is equal to or less than 10 cm.

3. The disassembly apparatus according to claim 1 or 2, comprising a conveyance unit capable of conveying the photoelectric conversion panel in at least a first direction.

4. The disassembly apparatus according to claim 3, wherein the conveyance unit is configured to be able to move the photoelectric conversion panel in both the first direction and a second direction opposite to the first direction.

5. The disassembly apparatus according to claim 4, comprising:
a second blade, wherein
the first blade is configured to apply an external force for peeling off the glass layer while the photoelectric conversion panel is moved in the first direction, and
the second blade is configured to apply an external force for peeling off the glass layer while the photoelectric conversion panel is moved in the second direction.

6. The disassembly apparatus according to any one of claims 1 to 5, comprising a heater capable of heating the photoelectric conversion panel.

7. The disassembly apparatus according to any one of claims 1 to 6, comprising a striking unit that breaks the glass layer.

8. A disassembly method comprising:
a peeling step of applying an external force for peeling off a glass layer of a photoelectric conversion panel curved while the photoelectric conversion panel including a photoelectric conversion element and the glass layer is curved.

9. The disassembly method according to claim 8, wherein the peeling step is performed while the photoelectric conversion panel is conveyed in a first direction in a state where the photoelectric conversion panel is curved.

10. The disassembly method according to claim 9, wherein the peeling step further includes applying an external force for peeling off the glass layer while the photoelectric conversion panel is conveyed in a second direction opposite to the first direction in a state where the photoelectric conversion panel is curved.

11. The disassembly method according to any one of claims 8 to 10, comprising a step of heating the photoelectric conversion panel before or during the peeling step.

12. The disassembly method according to any one of claims 8 to 11, comprising a step of breaking the glass layer before the peeling step.
